# EUROPEAN PATENT APPLICATION

(11) **EP 4 201 518 A1**
(43) Date of publication of application: **28.06.2023**
(21) Application number: 21217696.0
(22) Date of filing: 24.12.2021
(51) Int. Cl.: B01J 23/40, B01J 37/02, C23C 18/02, B05C 5/02, B05D 1/40, C23C 18/08, C23C 18/12

(54) **METHOD AND APPARATUS FOR PRODUCTION-SCALE PLATINUM-GROUP-METAL DEPOSITION**

(71) Applicant: BASF Corporation, Florham Park, NJ 07932 (US)
(72) Inventor: Vjunov, Aleksei, New Jersey, 08830 (US); Sun, Yipeng, New Jersey, 08830 (US); Schmitz, Kai, 31582 Nienburg (DE)
(74) Representative: Altmann Stößel Dick Patentanwälte PartG mbB

(57) **Abstract**

The present disclosure is directed to apparatuses and methods for depositing platinum-group metals (PGM) on substrates in a production line. The apparatus may include: at least one movement mechanism configured to move a plurality of substrates through a deposition region of the production line; at least one alignment mechanism configured to align a plurality of deposition units with a portion of the plurality of substrates in the deposition region; and at least one control unit configured to control a flow rate of the PGM through at least one supply line to the aligned plurality of deposition units to deposit the PGM on deposition surfaces of the aligned portion of the plurality of substrates.

## Description

The present disclosure relates to apparatuses and methods related to the deposition platinum-group metals (PGM) on substrates in a production line. For example, the present disclosure relates to inventive and unconventional processes and equipment for production-scale deposition of PGM on substrates during the production of environmental catalysts.

Environmental catalysts have been utilized in the treatment of exhaust gas streams from internal combustion engines for several years. Generally, in order to treat or purify exhaust gas containing pollutants such as hydrocarbons, nitrogen oxides, and carbon monoxide, catalytic converters containing a conversion catalyst are used in the exhaust gas line of an internal combustion engine. The conversion catalyst is typically known to oxidize unburnt hydrocarbon and carbon monoxide and reduce nitrogen oxides. Most of the commercially available catalysts contain palladium or platinum as a major platinum group metal component which is used along with a lesser amount of rhodium.

The catalyst is formed by coating the platinum group metal containing slurry on a substrate, and the coated layer (e.g., a washcoat) may be in the form of a layered structure having a bottom layer and a top layer. In some examples, the platinum group metals can be coated on the substrate uniformly with a PGM loading ranging from 3 to 300 g/ft³. In other techniques, the platinum group metals are coated on the substrate in a zoned manner. For example, the front, back, or any other specific zone of the catalyst can contain a higher proportion of PGM than other zones. In yet another example, the PGM can be deposited at a gradient that is perpendicular to the channel(s) of the catalyst, such that there is more or less PGM closer to the channel wall than there is away from the channel wall.

However, it is found that the existing catalysts may still be improved in terms of the washcoat architecture, PGM type, and loading amount as well as coating deposition dimensions and methods to achieve higher reduction of pollutants such as NOₓ, HC and CO. Some methods to address these concerns include applying an additional PGM enrichment zone which can be deposited on a bottom layer or a top layer at the inlet or outlet portion of the substrate in an axial and/or radial zone containing high loading of PGM (up to 1000 g/ft³) in order to achieve significantly higher pollutant reduction.

This design approach allows formation of complex PGM enrichment structures, e.g. resembling an inverted conical pyramid, a vortex or a star pattern extending into the underlying washcoat.

However, implementing this approach can be expensive and time-consuming, thus making it impractical for commercial use. PGM deposition generally takes place in the production process of environmental catalysts after coating (e.g., bya meter-charge-coating ("MCC") coater), and before calcination by a calcination furnace, of the substrate. Though the execution of these portions of the environmental catalyst production process would fundamentally remain the same, the layout of currently existing production facilities would nonetheless require expensive and time-consuming restructuring to accommodate the equipment that would otherwise be necessary to implement the above-described design approach. Even then, the resulting production layout would not have the capacity to produce the improved environmental catalysts efficiently (i.e., at production-scale).

Accordingly, the above-described design approaches are not commercially viable options for environmental catalyst production. Therefore, there is a need for improved processes and equipment for production-scale deposition of additional PGM enrichment zones on substrates during the production of environmental catalysts. Additionally, it is desired that these improved processes and equipment can be flexibly implemented to accomodate the unique needs and layouts of each environmental catalyst production facilities, as to reduce restructuring costs.

In some aspects of the present disclosure, it is directed to an apparatus for depositing platinum-group metals (PGM) on substrates in a production line. The apparatus may include: at least one movement mechanism configured to move a plurality of substrates through a deposition region of the process line; at least one alignment mechanism configured to align a plurality of deposition units with a portion of the plurality of substrates in the deposition region; and at least one control unit configured to control a flow rate of the PGM through at least one supply line to the aligned plurality of deposition units to deposit the PGM on deposition surfaces of the aligned portion of the plurality of substrates.

In some aspects of the present disclosure, it is directed to a method for depositing platinum-group metals (PGM) on substrates in a production line. The method may include moving, with at least one movement mechanism, a plurality of substrates through a deposition region of the production line; aligning, with at least one alignment mechanism, a plurality of deposition units with a portion of the plurality of substrates in the deposition region; and controlling, with at least one control unit, a flow rate of the PGM through at least one supply line to the aligned plurality of deposition units to deposit the PGM on deposition surfaces of the aligned portion of the plurality of substrates.

Other systems, methods, and computer-readable media are also discussed herein.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:
**FIG. 1A** is an illustration depicting a side view of an exemplary apparatus for depositing platinum-group metals (PGM) on substrates in a production line, consistent with some embodiments of the present disclosure.
**FIG. 1B** is an illustration depicting a top view of the exemplary PGM deposition apparatus illustrated in FIG. 1A, consistent with some embodiments of the present disclosure.
**FIG. 2A** is an illustration depicting a side view of another exemplary apparatus for depositing platinum-group metals (PGM) on substrates in a production line, consistent with some embodiments of the present disclosure.
**FIG. 2B** is an illustration depicting a top view of the exemplary PGM deposition apparatus illustrated in FIG. 2A, consistent with some embodiments of the present disclosure.
**FIG. 3A** is an illustration depicting a side view of yet another exemplary apparatus for depositing PGM on substrates in a production line, consistent with some embodiments of the present disclosure.
**FIG. 3B** is an illustration depicting a top view of the exemplary PGM deposition apparatus illustrated in FIG. 3A, consistent with some embodiments of the present disclosure.
**FIG. 4** is an illustration depicting an exemplary apparatus for depositing PGM on a substrate using a rotation stage, consistent with some embodiments of the present disclosure.
**FIG. 5A** is an illustration of an exemplary PGM coating profile as viewed from a cross-section of a substrate, consistent with some embodiments of the present disclosure.
**FIG. 5B** is an illustration of another exemplary PGM coating profile as viewed from a cross-section of a substrate, consistent with some embodiments of the present disclosure.
**FIG. 5C** is an illustration of another exemplary PGM coating profile as viewed from a cross-section of a substrate, consistent with some embodiments of the present disclosure.
**FIG. 5D** is an illustration of a further exemplary PGM coating profile as viewed from a cross-section of a substrate, consistent with some embodiments of the present disclosure.
**FIG. 5E** is an illustration of an exemplary cylinder PGM coating profile as viewed from a cross-section of a substrate, consistent with some embodiments of the present disclosure.
**FIG. 6** is a flow diagram of an exemplary process for depositing PGM on substrates in a production line, consistent with some embodiments of the present disclosure.

In the following detailed description, numerous specific details are set forth in order to provide a thorough understanding of the disclosed example embodiments. However, it will be understood by those skilled in the art that the principles of the example embodiments may be practiced without every specific detail. Well-known methods, procedures, and components have not been described in detail so as not to obscure the principles of the example embodiments. Unless explicitly stated, the example methods and processes described herein are neither constrained to a particular order or sequence nor constrained to a particular system configuration. Additionally, some of the described embodiments or elements thereof may occur or be performed simultaneously, at the same point in time, or concurrently.

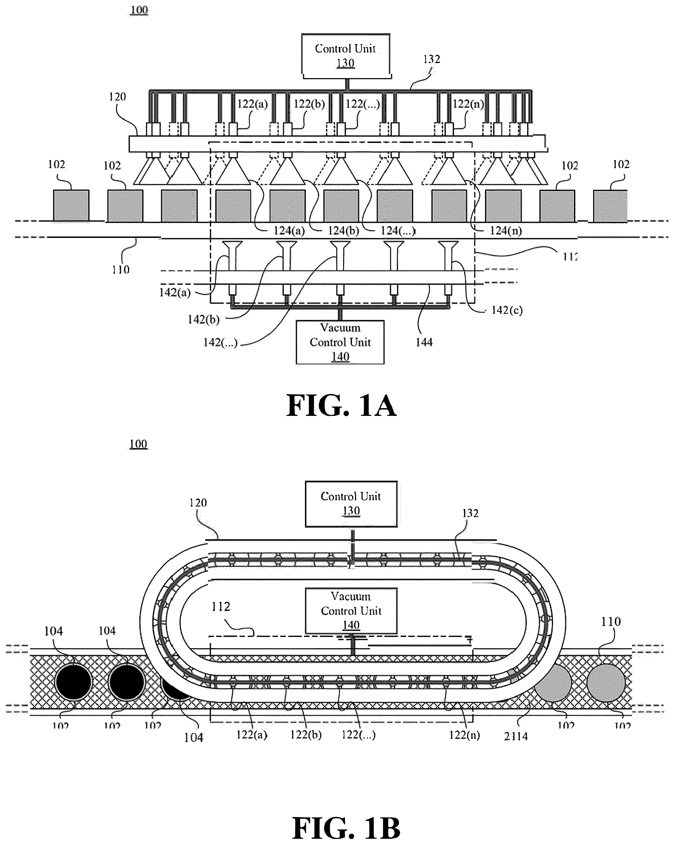

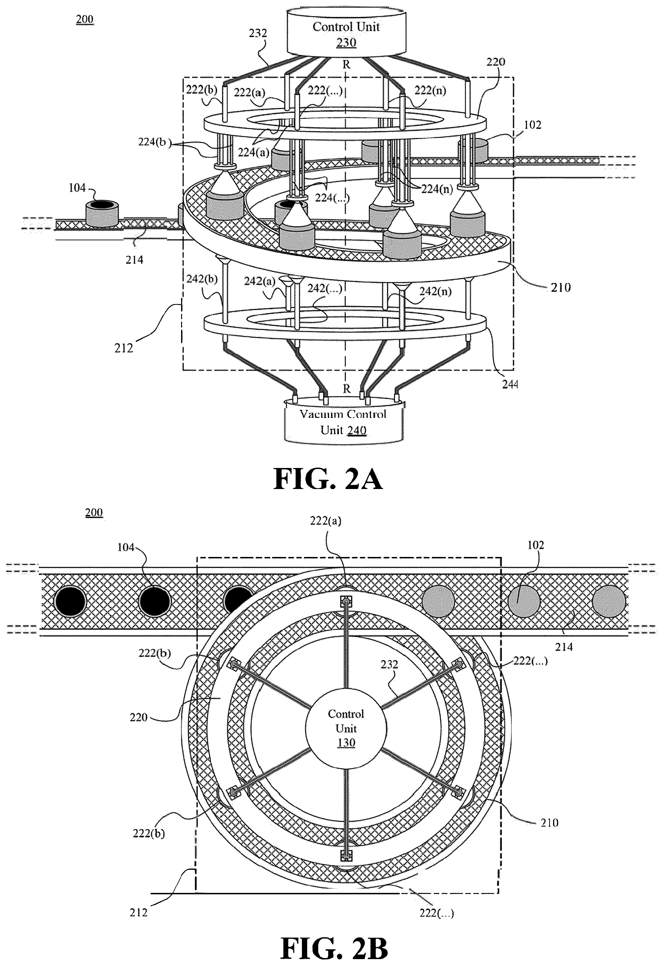

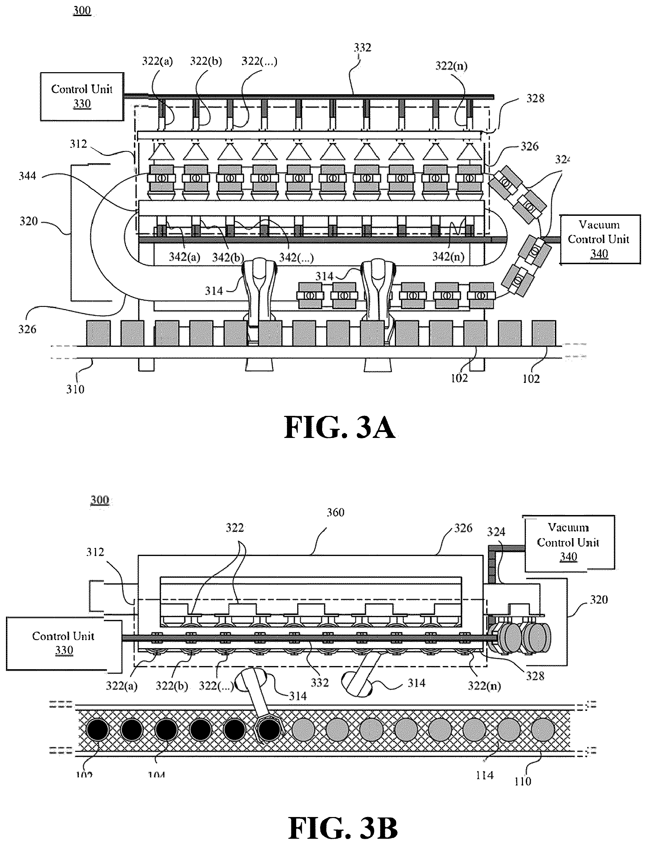

Reference will now be made in detail to the disclosed embodiments, examples of which are illustrated in the accompanying drawings. As FIGs. 1B, 2B, and 3B respectively include identical reference numerals as FIGs. 1A, 2A, and 3A and provide an additional top-down view of the PGM deposition apparatuses illustrated therein, reference will be made to "FIG. 1", "FIG. 2", and "FIG. 3" for convenience of the reader. Accordingly, it is to be understood that such references are intended to refer to boths figures "A" and "B" associated with the referenced figure numbers.

Certain embodiments disclosed herein may include systems, methods, and computer-readable media related to the deposition of platinum-group metals (PGM) on substrates in a production line. A platinum group metal (PGM) may include any component or material that includes a PGM, such as platinum (Pt), rhodium (Rh), palladium (Pd), or the like which, upon calcination or use of the catalyst, decomposes or otherwise converts to a catalytically active form, usually the metal or the metal oxide. A PGM as referred to herein may be in a metallic form, with zero valence, in a solution form of metal salts, or in an oxide form. Additionally, reference to a PGM may refer to a PGM in any valence state allows for the presence of the PGM in any valence state.

According to one or more embodiments, a "substrate" may refer to a substrate of an environmental catalyst, and may be constructed of any material typically used for preparing automotive catalysts and typically comprises a ceramic or a metal monolithic honeycomb structure. In some embodiments, the substrate may be a ceramic substrate, a metal substrate, a ceramic foam substrate, a polymer foam substrate or a woven fibre substrate. In some embodiments, a substrate may provide a plurality of wall surfaces upon which washcoats comprising the catalyst compositions are applied and adhered, thereby acting as a carrier for the catalyst compositions.

Exemplary metallic substrates include heat resistant metals and metal alloys such as titanium and stainless steel as well as other alloys in which iron is a substantial or major component. Such alloys may contain one or more nickel, chromium, and/or aluminium, and the total amount of these metals may advantageously comprise at least 15 wt.% of the alloy. e.g., 10-25 wt.% of chromium, 3-8 % of aluminium, and up to 20 wt.% of nickel. The alloys may also contain small or trace amounts of one or more metals such as manganese, copper, vanadium, titanium and the like. The surface of the metal substrate may be oxidized at high temperature, e.g., 1000 °C and higher, to form an oxide layer on the surface of the substrate, improving the corrosion resistance of the alloy and facilitating adhesion of the washcoat layer to the metal surface.

Ceramic materials used to construct a substrate may include any suitable refractory material, e.g., cordierite, mullite, cordierite-alumina, silicon nitride, zircon mullite, spodumene, alumina-silica magnesia, zircon silicate, sillimanite, magnesium silicates, zircon, petalite, alumina, aluminosilicates and the like.

Any suitable substrate may be employed in disclosed embodiments, such as a monolithic flow-through substrate having a plurality of fine, parallel gas flow passages extending from an inlet to an outlet face of the substrate such that passages are open to fluid flow. The passages, which may include essentially straight paths from the inlet to the outlet, may be defined by walls on which the catalytic material is coated as a washcoat so that the gases flowing through the passages contact the catalytic material. The flow passages of the monolithic substrate may include thin-walled channels which are of any suitable cross-sectional shape, such as trapezoidal, rectangular, square, sinusoidal, hexagonal, oval, circular, and the like. Such structures may contain from about 60 to about 1200 or more gas inlet openings (i.e., "cells") per square inch of cross section (cpsi), more usually from about 300 cpsi to 900 cpsi. The wall thickness of flow-through substrates may vary, with a typical range from between 0.002 inches and 0.1 inches. A representative commercially-available flow-through substrate is a cordierite substrate having 600 cpsi and a wall thickness of 6 mil, or 600 cpsi and a wall thickness of 4.0 mil. However, it will be understood that the disclosure is not limited to a particular substrate type, material, or geometry.

In some embodiments, the substrate may be a wall-flow substrate, wherein each passage is blocked at one end of the substrate body with a non-porous plug, with alternate passages blocked at opposite end-faces. This requires that gas flow through the porous walls of the wall-flow substrate to reach the exit. Such monolithic substrates may contain up to about 700 or more cpsi, such as about 100 to 600 cpsi and more typically about 200 to about 300 cpsi. The cross-sectional shape of the cells may vary as described above. Wall-flow substrates typically have a wall thickness between 0.002 and 0.1 inches. A representative commercially available wall-flow substrate is constructed from a porous cordierite, an example of which has 200 cpsi and 10 mil wall thickness or 300 cpsi with 8 mil wall thickness, and wall porosity between 45-65%. Other ceramic materials such as aluminum-titanate, silicon carbide and silicon nitride may also be used as wall-flow filter substrates. However, it will be understood that the disclosure is not limited to a particular substrate type, material, or geometry. Note that where the substrate is a wall-flow substrate, the catalyst composition can permeate into the pore structure of the porous walls (i.e., partially or fully occluding the pore openings) in addition to being disposed on the surface of the walls. In one embodiment, the substrate has a flow through ceramic honeycomb structure, a wall-flow ceramic honeycomb structure, or a metal honeycomb structure.

### Movement Mechanism

Disclosed embodiments may include at least one movement mechanism configured to move a plurality of substrates through a deposition region of the production line. A movement mechanism may include any mechanical handling equipment configured to move and/or manipulate one or more objects or materials, such as a conveyor, a crane, or any other type of transport equipment. For example, FIGs. 1, 2, and 3 each illustrate different configurations of exemplary PGM deposition apparatuses 100, 200, and 300, each of which respectively utilize a conveyor belt (i.e., conveyors 110, 210, and 310) to move substrates 102 through a deposition region (i.e., deposition regions 112, 212, and 312) for depositing PGM 104. In FIG. 3, however, conveyor 310 does not pass directly through deposition region 312. That is, in order to reach deposition region 312, substrate(s) 102 must first be placed into substrate holders 324 by robotic arms 314 and moved to deposition region 312 by alignment conveyor 326. A deposition region (e.g., deposition regions 112, 212, 312) may refer to any area associated with the deposition apparatus in which the PGM deposition apparatus deposits PGM 104 on substrates located therein.

In some embodiments, as indicated above, the at least one movement mechanism may include at least one conveyor configured to move the substrates. A "conveyor" as used herein may refer to any piece of mechanical handling equipment that is configured to move material from one location to another. Conveyors are used widespread across a large range of industries, and thus, understandably, there are many different types of conveyors designed for a variety of applications. However, it is to be understood that any type of conveyor can be used in association with the disclosed methods without departing from the scope of the claimed disclosure. For example, the at least one movement mechanism may include belt conveyors, belt-driven live roller conveyors, bucket conveyors, chain conveyors, chain-driven live roller conveyors, drag conveyors, gravity conveyors, lineshaft roller conveyors, motorized-drive roller conveyors, overhead conveyors, vacuum conveyors, vertical conveyors, vibrating conveyors, wire mesh conveyors, or any other conveyor suitable for movement of a plurality of substrates through a production line. In some embodiments, a conveyor may also include a series of clamps that can grip substrates and/or control substrates to move in one or more directions in three dimensions. For example, as shown in FIG. 1, PGM deposition apparatus 100 includes conveyor belt 110 to move substrates 102 through deposition region 112. Similarly, PGM deposition apparatus 300 in FIG. 3 includes conveyor 310 to move substrates 102. In some embodiments, the at least one conveyor may include a flexible conveyor, or a conveyor that can move objects along a three-dimensional path, such as a spiral conveyor. For example, PGM deposition apparatus 200 in FIG. 2 includes spiral conveyor 210, which not only moves substrates 102 horizontally, but also vertically, and moves the substrates in a spiral path around an axis of rotation (R).

A parameter that may be optimized in order to achieve the desired enrichment zone shape and location may include the angle of deposition of PGM 104 relative to a deposition surface of a substrate. Some embodiments of the present disclosure may allow for the modification of this parameter during catalyst production. For example, the at least one movement mechanism may further be configured to selectively raise, lower, or tilt at least one surface of the at least one conveyor. This may be achieved, for example, with a series of actuators (e.g., soft actuators, hydraulic actuators, pneumatic actuators, electric actuators, thermal actuators, magnetic actuators, mechanical actuators, etc.). For example, in FIG. 1, a series of hydraulic actuators (not shown) may cause a surface of conveyor 110 to be raised, lowered, and/or tilted in deposition region 112, thereby modifying the manner in which PGM 104 is deposited thereon.

### Alignment Mechanism

Disclosed embodiments may include at least one alignment mechanism. The at least one alignment mechanism may be configured to align a plurality of deposition units with a portion of the plurality of substrates located in the deposition region. An alignment mechanism may include any type of mechanical handling equipment previously discussed herein (e.g., a conveyor, actuator, or any other movement mechanism), a combination of different types of mechanical handling equipment, or any other mechanism or combination of mechanisms configured to feed, orient, load, unload, or otherwise manipulate substrates to be in a desired position for the deposition of PGM solution on one or more surfaces thereof. For example, in FIG. 1, PGM deposition apparatus 100 includes alignment mechanism 120, which is a type of overhead conveyor configured to move a plurality of deposition units 122(a)-(n) in a clockwise direction along a path that coincides with conveyor 110 such that they align with a portion of the plurality of substrates 102 in deposition region 112.

A "deposition unit" as referred to herein may refer to any device or structure including an aperture, opening, or any other outlet through which PGM can be expelled such that the PGM 104 may be deposited on a surface of a substrate aligned with the respective deposition unit. For example PGM deposition apparatuses 100, 200, and 300 each respectively include deposition units 122(a)-(n), 222(a)-(n), and 322(a)-(n), which PGM 104 may be expelled through to be deposited on a deposition surface of substrates 102 when substrates 102 are in deposition regions 112, 212, and 312, respectively. Any number of deposition units may be used in a single PGM deposition apparatus, and not all deposition units of a single apparatus need to be utilized at the same time. For example, in FIG. 1, it can be observed that not all of the deposition units are being utilized at the same time. That is, most of the deposition units 122 coupled to deposition alignment mechanism 120 are not in deposition region 112 and thus are not being utilized. In contrast, in FIG. 2, all of deposition units 222(a)-(n) of PGM deposition apparatus 200 are within deposition region 212 and are utilized to deposit PGM 104 on substrates 102 moving down spiral conveyor 210 in a counterclockwise direction, with the exception of a period of time when one of deposition units 222(a)-(n) finishes depositing PGM 104 on a substrate 102 at the bottom end of spiral conveyor 210 and must reposition to begin depositing PGM 104 on a substrate 102 at the top end of spiral conveyor 210. Furthermore, in FIG. 3, all of deposition units 322(a)-(n) of PGM deposition apparatus are all simultaneously utilized to deposit PGM 104 on substrates 102 that are in deposition zone 312, and are simultaneously not utilized when one group of coated substrates 102 (substrates 102 are "coated" once PGM has been deposited on them) are removed from deposition region 312 and an uncoated group of substrates 102 are moved into deposition region 312 with alignment conveyor 326 to be aligned with deposition units 322(a)-322(n).

Some exemplary deposition units consistent with the disclosed embodiments include sprayers or nozzles. When referring to "nozzles" as described herein, it is understood that any type of nozzle may be used consistent with the disclosed embodiments. For example, a deposition unit consistent with disclosed embodiments (e.g., deposition units 122(a)-(n), 222(a)-(n), and 322(a)-(n)) may include at least one hydraulic nozzle (e.g., deflection nozzles, simple orifice nozzles, small orifice nozzles, impingement nozzles, spiral nozzles, axial nozzles, tangential nozzles, etc.) and/or at least one atomizing nozzle (e.g., internal mix atomizing nozzles, no-drip internal mix atomizing nozzles, external mix atomizing nozzles, no-drip external mix atomizing nozzles, siphon-fed atomizing nozzles, no-drip siphon-fed atomizing nozzles, etc.) and/or any other commercially available nozzle (e.g., special purpose nozzles, spillback nozzles and lances, eductor nozzles, combi-nozzles, twin-jet nozzles, ultrasonic nozzlees, electrostatic spray nozzles, etc.) and may be configured to produce one or more of a plurality of different spray patterns (e.g., flat fan, mist/fog fan, full cone, hollow cone, straight jet, etc.). A PGM deposition apparatus consistent with the present disclosure may include a single nozzle type or a plurality of different or same nozzle types, or it may be configured to produce either a single spray pattern or a plurality of different spray patterns. For example, in FIG. 1, deposition units 122(a)-(n) may each be an internal mix atomizing nozzle configured to only produce a full cone spray pattern. Alternatively, deposition unit 122(a) may be an internal mix atomizing nozzle configured to produce a full cone, deposition unit 122(b) may be a siphon-fed nozzle configured to produce a flat fan spray pattern, and so forth. In some embodiments, a single deposition unit may include a pluraliy of nozzles. For example, in applications where the size of the substrate is large (e.g., 20-30 inches in diameter), the use of multiple nozzles may be desired, and may be achieved, for example, by arranging a plurality of nozzles in a shower-head like pattern or design such that the individual nozzles can supply different amounts of PGM, for example, by adjusting concentration of the PGM solution or the pressure in each individual nozzle.

Another parameter that may be optimized in order to achieve the desired enrichment zone shape and location may include a position or proximity of a PGM deposition unit relative to a deposition surface of a substrate. Consistent with some embodiments of the present disclosure, this parameter may also be modified during catalyst production. For example, in some embodiments, the at least one alignment mechanism may be configured to selectively change a position of the plurality of deposition units in three dimensions relative to deposition surfaces to adjust a PGM deposition pattern on the deposition surfaces. This may be achieved. for example, through a plurality of actuators, positioning modules, or other means of mechanical movement configured to move the at least one alignment mechanism across three dimensions (e.g., a robotic arm), such that each of the plurality of deposition units coupled to the alignment mechanism moves across three dimensions. For example, in FIG. 3, frame 326 of PGM deposition apparatus 300 may be fitted with a plurality of actuators (not shown) that, when activated, cause frame 326 to move in one or more directions across three dimensions, thereby causing deposition unit bar 328, and thereby deposition units 322(a)-(n) attached thereto, to additionally move in the one or more directions across three dimensions. This may also achieved, for example, with positioning modules, actuators, or other means of mechanical movement associated with each deposition unit and configured to move a respective deposition unit across three dimensions. For example, in FIG. 3, deposition units 322(a)-(n) may each be associated with a set of actuators (not shown) that, when activated, cause the respective deposition unit to move in one or more directions across three dimensions. In some embodiments, the deposition units may be individually or collectively moved during the deposition of the PGM according to a predetermined coating profile.

Alternatively, in some embodiments, the at least one alignment mechanism may include a plurality of different sets of actuators associated with each individual deposition unit, such that each deposition unit may change its position in three dimensions independently of the rest of the plurality of deposition units in the plurality of deposition units. For example, in FIG. 1, deposition units 122(a), 122(b), 122(...), 122(n) may each be coupled to a unique set of actuators configured to move each deposition unit across three dimensions independently. For instance, the actuators associated with deposition unit 122(a) may position deposition unit 122(a) such that it is vertically close to a surface of a substrate 102 but horizontally distant from a center axis of the substrate, whereas the actuators associated with deposition unit 122(b) may position deposition unit 122(b) further away vertically to the surface and closer to the center axis of the substrate than deposition unit 122(a).

In some disclosed embodiments, the at least one pressurized nozzle may include at least one housing configured to confine the deposition of the PGM 104 to the deposition surfaces or specific portions of the deposition surfaces. As shown in FIG. 1, deposition units 122(a), 122(b), 122(...), 122(n) are each associated with housing 124(a), 124(b), 124(...), 124(n) attached thereto, respectively. For example, a nozzle may be coupled to a conical housing, wherein the narrow end of the cone is associated with the nozzle, and the wide end is associated with the deposition surface of an aligned substrate. The housing may be configured to nearly touch the deposition surface to minimize the amount of PGM to escape from the housing area during deposition. In some embodiments, the housing may be shaped according to the desired PGM deposition pattern. For example, the conical housing just described may be implemented to achieve a circular or conical disposition of PGM on the deposition surface, however, other housing configurations may be implemented to achieve other deposition patterns in any desired shape (e.g., an oval, square, star, various polygons, or other custom shapes or designs).

In some embodiments, the at least one alignment mechanism may include a deposition alignment conveyor configured to match a speed and horizontal position of the portion of the plurality of substrates to align them with the plurality of deposition units. For example, some exemplary configurations of a PGM deposition apparatus (e.g., deposition apparatus 100 in FIG.1 and deposition apparatus 200 in FIG. 2) may include a conveyor (e.g., conveyors 110 and 210) configured to move the plurality of substrates with at least one speed through the deposition region (e.g., deposition regions 112 and 212), without stopping. In these configurations, it is necessary to move the plurality of deposition units in tandem with the plurality of substrates moving through the deposition region such that PGM can be deposited on the substrates during movement of said substrates through the deposition region.

Further for example, in FIG. 1, deposition alignment mechanism 120 may include a conveyor that is disposed on a horizontal plane and configured to rotate deposition units 122(a)-(n) in a clockwise path along the conveyor. A portion of the path defined by deposition alignment mechanism 120 is vertically aligned directly above the movement path of substrates 102 through deposition region 112. While substrates 102 move with at least one speed through deposition region 112, deposition alignment mechanism 120 may move deposition units 122(a)-(n) with equal speed such that they remain aligned with substrates 102 through deposition region 112. In the event that deposition units 122(a)-(n) are moving at an equal speed as substrates 102 but are still misaligned, deposition alignment mechanism 120 may accelerate and/or decelerate the speed of deposition units 122(a)-(n) at varying rates until they become aligned.

In some disclosed embodiments, the deposition alignment conveyor may further be configured to match a vertical position of the portion of the plurality of substrates in the deposition region to align them with the plurality of deposition units. For example, as discussed in the preceding paragraph, some exemplary configurations of a PGM deposition apparatus (e.g., deposition apparatus 100 in FIG.1 and deposition apparatus 200 in FIG. 2) may include a conveyor (e.g., conveyors 110 and 210) configured to move the plurality of substrates with at least one speed through the deposition region, without stopping. However, some of these configurations may include a vertical conveyor (not shown) or a flexible conveyor (e.g., spiral conveyor 210 in FIG. 2) that move substrates in a vertical direction additionally or alternatively to a horizontal position. In these configurations, it is necessary to move the plurality of deposition units at an equal vertical speed as the plurality of substrates moving through the deposition region such that PGM can be deposited on the substrates during movement of said substrates through the deposition region.

Vertical positioning of the deposition units may be achieved, for example, with one or more actuators (e.g., soft actuators, hydraulic actuators, pneumatic actuators, electric actuators, thermal actuators, magnetic actuators, mechanical actuators, etc.) coupled to the deposition units (e.g., actuators 224(a)-(n) associated with deposition units 222(a)-(n)) and configured to move the deposition units along a vertical axis. In some embodiments, vertical movement of the deposition units may also be achieved by using one or more robotic arms (e.g., cartesian robots, collaborative robots, cylindrical robots, spherical robots, SCARA robots, articulated robots, parallel robots, anthromorphic robots, etc.) coupled to the deposition units (not shown) and configured to move the depositions across three dimensions, including a vertical direction.

For example, in FIG. 2, deposition alignment mechanism 220 may include a conveyor that is disposed on a horizontal plane and configured to rotate deposition units 222(a)-(n) in a counter-clockwise path around a vertical axis (R) that coincides vertically with spiral conveyor 210. While substrates 102 move with at least one horizontal speed at least one vertical speed through deposition region 212, deposition alignment mechanism 220 may move deposition units 222(a)-(n) with equal horizontal speed such that they remain aligned with substrates 102 through deposition region 212. In the event that deposition units 222(a)-(n) are moving at an equal speed as substrates 102 but are still misaligned, deposition alignment mechanism 220 may accelerate and/or decelerate the horizontal speed of deposition units 222(a)-(n) at varying rates until they become aligned. Additionally, in some embodiments, deposition alignment mechanism 220 may include actuator pairs 224(a), 224(b), 224(...), 224(n) that are respectively coupled to deposition units 222(a), 222(b), 222(...), 222(n) and configured to move deposition units 222(a)-222(n) with equal vertical speed such that they remain aligned with substrates 102 through deposition region 212. In the event that deposition units 222(a)-(n) are moving at an equal speed as substrates 102 but are still vertically misaligned, actuator pairs 224(a)-(n) may accelerate and/or decelerate the vertical speed of deposition units 222(a)-(n) at varying rates until they become vertically realigned. In some embodiments, deposition alignment mechanism 220 may not include a rigid frame, and may include a plurality of moveable components to enable the three-dimensional movement of deposition units 222(a)-222(n).

### Control Unit

Disclosed embodiments may include at least one control unit (e.g., control units 130, 230, and 330) configured to control a flow rate of the PGM through at least one supply line (e.g., supply lines 132, 232, and 332) to the aligned plurality of deposition units (e.g., deposition units 122(a)-(n), 222(a)-(n), and 322(a)-(n)) to deposit the PGM on deposition surfaces of the aligned portion of the plurality of substrates (e.g., substrates 102 located in deposition regions 112, 212, and 313). The at least one control unit may, in some embodiments, additionally be configured to control other components of the PGM deposition apparatus, such as the at least one movement mechanism and the at least one alignment mechanism. For example, the at least one control unit may include a user interface that may enable an operator to remotely operate the PGM deposition apparatus, or it may include at least one computer system electronically coupled to each component of the PGM deposition apparatus and including a computer-readable storage media containing instruction that, when executed by at least one processor, causes each component of the PGM deposition apparatus to perform preconfigured operations resulting in complete operation the PGM deposition apparatus. For example, in FIG. 1, control unit 130 may include at least one computer system configured to automatically operate PGM deposition apparatus 100 by controlling conveyor 110, alignment conveyor 120, and deposition units 122(a)-(n).

In some embodiments, controlling the flow rate of the PGM through the supply line comprises controlling a state of at least one valve associated with the supply line or with the plurality of deposition units. The control unit may include one or more electric motors, air or pneumatic systems, or solenoids that may be manually triggered or preprogrammed (e.g., through a program stored in computer-readable storage media) to automatically actuate the at least one valve to release a supply of PGM through the at least one valve at selectively variable flow rate, which can be an individual valve located at an end of the supply line associated with the control unit, a plurality of valves located at ends of the supply line associated with each deposition unit, one or more valves located in an intermediate location of the supply valve, or a plurality of valves located at any combination of these locations. For example, in FIG. 1, there may be a plurality of valves (not shown), each associated with one of deposition units 122(a)-(n), that may be individually actuated by control unit 130 when the respective deposition unit is aligned with a substrate 102 in deposition region 112. In FIG. 3, however, there may only be one valve that is actuated to supply PGM to all of deposition units 322(a)-(n) when they are all aligned with an uncoated group of substrates 102 in deposition region 312. Furthermore, the state of the at least one valve is not limited to "open" and "closed" positions, and may be variably actuated to any position therebetween. That is, in some embodiments, the at least one valve may be only partially open, such that the control unit not only can turn the PGM supply "on" or "off," but can also control the flow rate to be any value between the minimum flow rate (i.e., 0) and the maximum flow rate (i.e., when the at least one valve is fully open) by variably controlling the actuation of the at least one valve. In some embodiments, the flow rate of PGM may also be controlled by controlling a duty cycle of one or more of the plurality of deposition units (i.e., a rate at which each deposition unit "opens" and "closes").

In some embodiments, a supply state and/or a deposition state of the PGM (i.e., a state of the PGM material as it is supplied and/or a state of the PGM material as it is deposited) may be chosen from one or more of a solution, a suspension, an aerosol, a powder, and a slurry. The choice of supply and/or deposition state may depend on the desired washcoat architecture, as each state of PGM material may interact with the substrate differently. For example, thinner, water-like, solutions may penetrate the whole depth of the channel wall (i.e., perpendicular to the channel) and also achieve significant length along the channel driven by capillary force. With more viscous solutions, the degree to which the deposited PGM penetrates both the length and the depth of the channel wall can be limited, as the increased viscosity of the deposited solution helps suppress the capillary force. In some embodiments, the supply state need not be identical to the deposition state. That is, a PGM may be supplied to the at least one supply line in one state and be converted to another state prior to or during deposition such that the deposited PGM is in a different state than which it was supplied.

In some embodiments, the at least one control unit may further be configured to control a flow rate of carrier gas through the at least one supply line to thereby control a deposition pressure and nebulization of the PGM. That is, the at least one control unit may be configured to control the actuation of at least one additional valve to release, from a supply or source of carrier gas, the carrier gas into the at least one supply line. Accordingly, the control unit can provide additional control over flow rate-dependent parameters, such as PGM droplet size and the amount of PGM deposited per unit of time. As described above, the control unit may also be configured to control the valve to be in any state between fully open and fully closed, giving the control unit a high degree of control over the deposition pressure and nebulization of the PGM, and thus a high degree of control over the washcoat architecture and coating strategy. In some embodiments, the at least one supply line carrying the carrier gas may be the same as the at least one supply line carrying the PGM supply, or they may be separate supply lines that are joined at or near to one or more deposition units to facilitate the nebulization of the PGM. Thus, in some embodiments, the PGM may be supplied as a solution (e.g., a liquid) or a suspension, and thereafter be deposited as an aerosol or slurry due after nebulization.

In some embodiments, the flow rate and the deposition pressure may be non-linear. That is, throughout deposition of the PGM on the substrates, the flow rate and deposition pressure can be controlled to be non-constant by changing a state of the at least one valve (e.g., open, closed, ½ open, ¾ open, etc.), thus enabling the creation of countless possible PGM gradients that may be deposited onto the substrates. Accordingly, the at least one control unit may be configured to create a plurality of different PGM gradients on the deposition surface by controlling the non-linear flow rate and deposition pressure, thus further providing an even higher degree of control over the washcoat architecture and coating strategy.

In some embodiments, the at least one alignment mechanism is further configured to align a plurality of vacuum units with the portion of the plurality of substrates in the deposition region, and to control a suction force applied by the plurality of vacuum units on suction surfaces of the aligned portion of the plurality substrates, the suction surfaces being on an opposite side of the aligned portion of the plurality substrates than deposition surfaces, thereby cooperating with the plurality of deposition units to create a pressure gradient across the substrate. That is, the at least one alignment mechanism may include a further alignment mechanism (e.g., alignment mechanisms 144 and 244), additional to the mechanism used to align the plurality of deposition units with the substrates (e.g., alignment conveyors 120, 220), configured to align suction units (e.g., vacuums) with the surfaces opposite the deposition surfaces of the substrates. Although this suction alignment mechanism need not use identical machinery and/or components to the deposition alignment mechanism, its functions and capabilities are substantially similar and may be realized through similar means (e.g., by way of alignment conveyors, robotic arms, actuators, and other movement mechanisms). By utilizing additional suction force on a surface of the substrate, the PGM deposition apparatus is thereby able to control a pressure gradient across the substrate during PGM deposition, thus providing an even greater degree of control over the washcoat archeetecture and coating strategy.

By way of example, PGM deposition apparatuses 100, 200, and 300 of FIGs. 1, 2, and 3 each respectively include vacuum control units 140, 240, and 340, which are each respectively configured to control suction units 142(a)-(n), 242(a)-(n), and 342 (a)-(n). In FIG. 1, suction units 142(a)-(n) are aligned with substrates 102 in deposition region 112 by alignment mechanism 144, which may be a conveyor of the like of alignment conveyor 120 or any other suitable movement mechanism, in order to apply a suction force on substrates 102 through a mesh portion of conveyor 110. In FIG. 2, suction units 242(a)-(n) are aligned with substrates 102 in deposition region 212 by alignment mechanism 244, which may be a conveyor of the like of alignment conveyor 220 or any other suitable movement mechanism, in order to apply a suction force on substrates 102 through a mesh portion of spiral conveyor 210.

Although not specifically illustrated, alignment mechanism 244 and suction units 242(a)-(2) may also be equipped with actuators similar to actuator pairs 224(a)-(n) that are configured to match a vertical speed of substrates 102 as they pass through deposition region 212. In FIG. 3, suction units 242(a)-(n) are aligned with substrates 102 in deposition region 312 by the movement of substrates 102 via substrate holders 324 by robotic arms 314 and moved to deposition region 112 by the movement of substrate holders 324 via alignment conveyor 326. Additionally frame 326 of PGM deposition apparatus 300 may be fitted with a plurality of actuators (not shown) that, when activated, cause frame suction bar 344 to move in one or more directions in three dimensions, thereby changing a relative position of suction mechanisms 342(a)-(n) relative to a suction face of the substrates in deposition zone 312. Here suction units do not apply a suction force through a mesh material as there is no conveyor in the deposition region. Instead, suction units 342(a)-(n) apply a suction force directly to substrates 102 in deposition region 312.

In some embodiments, the at least one movement mechanism may further include at least one of secondary movement mechanism. Referring again to FIG. 3, conveyor 310 may be the at least one movement mechanism and robotic arms 314 may be the at least one secondary movement mechanism. In some embodiments, robotic arms 314 may be configured to remove at least one substrate 102 from conveyor 310 and provide the at least one substrate 102 to alignment mechanism 320. In some embodiments, the at least one alignment mechanism may include a plurality of primary alignment mechanisms coupled to a secondary alignment mechanisms. For example, in PGM deposition apparatus 300, alignment mechanism includes a plurality of substrate holders 324 (i.e., the plurality of primary alignment mechanisms) and alignment conveyor 326 (the secondary alignment mechanism). Substrate holders 324 may be configured to receive the removed substrates 102 from robotic arms 314 and return said substrates 102 to robotic arms 314 after PGM 104 has been deposited on substrates 102. To facilitate the deposition of PGM 104 on substrates 102, alignment conveyor 326 may move the substrates held in substrate holders 324 from a first position in which substrates 102 are received by substrate holders 324, to a second position in which substrates 102 are aligned with deposition units 322 and PGM 104 is deposited onto substrates 102, and back to the first position, where substrates 102 are then retrieved by robotic arms 314 and returned by robotic arms 314 to conveyor 310.

Some disclosed embodiments may further include at least one heating mechanism configured to heat the substrate and/or at least one charging mechanism configured to positively or negatively charge a substrate, thereby creating an electrostatic attraction or repulsion with the PGM. Heating and/or charging a substrate can further control the specific desired area where the PGM may be deposited. For example, depositing an elevated amount of PGM at the front, (e.g. 1/5-1/3 of the substrate length), often leads to improved catalyst light-off, as this part of the catalyst will heat up first. In yet another example, it may be desired to deposit more metal in the mid-section (e.g., 0.5-1 inches from inlet) of the substrate if there is an expectation that the catalyst will be exposed to excessive amounts of phosphorous, such that the front section with low PGM can serve as a sacrifical phosphorous trap. The heating mechanism (not shown) may be located upstream and/or downstream and/or within the production line from deposition regions 112, 212, and 313, and may be configured to heat the substrates through an electric or magnetic conduit, or through microwave and/or infrared radiation. Similarly, the at least one charging mechanism may be located upstream and/or downstream and/or within the production line from deposition regions 112, 212, 313, and may be configured to charge the at least one substrate using magnetic fields or by charging an of an insulator of the at least one substrate. Additionally located upstream and/or downstream of deposition regions 112, 212, and 313, may be at least one weighing station (not shown) configured to weigh each passing substrate before and after PGM deposition.

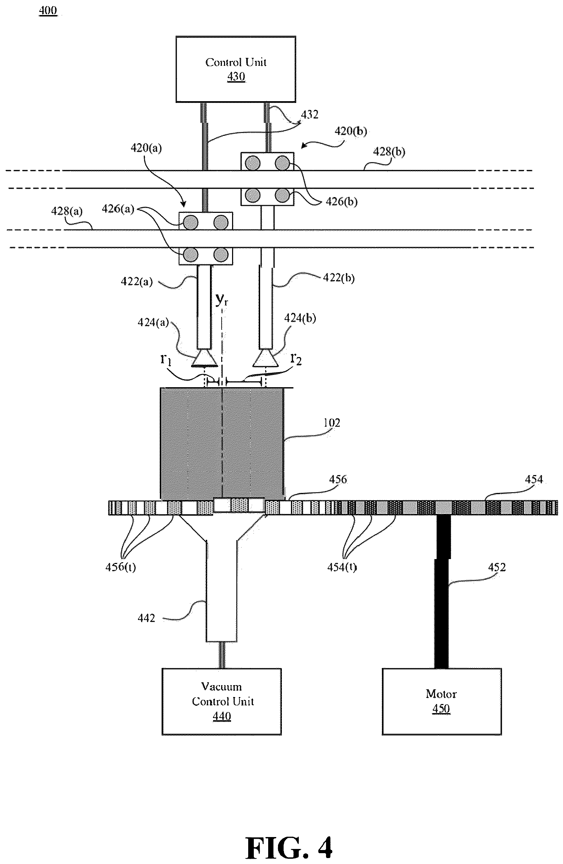

Some disclosed embodiments may include at least one rotation stage. The at least one rotation stage may carry and/or hold the at least one substrate, such that the at least one rotation stage rotates each substrate as PGM is deposited on the deposition surface thereof. The at least one rotation stage may be driven by a motor that drives the rotation stage about a rotation axis thereof. Alternatively, the at least one rotation stage may include teeth or cogs on its outer circumference that coincide with another teeth or cogs of another gear or wheel that is driven by a motor and thereby rotates the at least one rotation stage about its rotation axis. By way of example, PGM deposition apparatus 400 of FIG. 4 includes a rotation stage 456 that rotates substrate 102 about rotation axis yᵣ. Additionally, PGM deposition apparatus 400 includes suction unit 442 that is controlled by vacuum control unit 440 to selectively apply a suction force on substrate 102. Suction unit 442 may apply the suction force to substrate 102, for example, through a circular opening in rotation stage 456 with a diameter large enough to accommodate suction unit 442 and smaller than a diameter of substrate 102 such that substrate 102 remains supported. In the illustrated embodiment, PGM deposition apparatus 400 includes motor 450 that drives wheel 454 via axle 452. Wheel 454 has teeth 454(t) that coincide and cooperate with teeth 456(t) to rotate rotation stage 456, and therefore substrate 102, about rotation axis yᵣ. However, it is to be understood that a rotation stage may be directly coupled to a motor and may therefore not require an additional driven wheel, consistent with disclosed embodiments.

In some embodiments, the at least one deposition unit may include at least one nozzle configured to be selectively aligned at a particular radius from the rotational axis of the at least one rotation stage and the at least one substrate. The at least one nozzle may be selectively aligned with the at least one alignment system associated with the corresponding PGM deposition apparatus, or it may be further aligned by a sub-alignment system associated with the respective deposition unit. During deposition of the PGM, the at least one nozzle may spray the PGM onto the deposition surface of the at least one substrate at a location associated with the radius while the substrate is rotated by the at least one rotation stage. Accordingly, the at least one nozzle may cooperate with the at least one rotation stage to deposit the PGM on the deposition surface along a circumference with the particular radius. In some embodiments, there may be two or more nozzles that may each be selectively aligned individually at unique respective radii, such that the nozzles cooperate with the at least one rotation stage to deposit the PGM along multiple circumferences, each circumference having a respective unique radius. In some embodiments, the at least one nozzle moves in various directions and/or has a movement such that the at least one nozzle starts spraying at a particular radius and then, moves toward the center of the at least one substrate to accomplish the coating profile. In some embodiments, a speed at which the one or more nozzle moves is controlled and/or modified by a predefined code and/or with a nozzle movement mechanism. In some embodiments, the at least one nozzle and a nozzle movement mechanism is configured to selectively align the at least one nozzle to deposit the PGM on the deposition surface of the substrate at a predefined and/or a variable location and/or speed. In some embodiments, a first nozzle and a second nozzle are configured with one or more nozzle movement mechanisms, independently or in combination, aligning the first nozzle and the second nozzle to deposit the PGM on the deposition surface of the substrate.

By way of example, PGM deposition apparatus 400 may include alignment mechanisms 420(a) and 420(b) which are configured to move deposition units 422(a) and 422(b) with nozzles 424(a) and 424(b) independently using wheels 426(a) and 426(b) along rails 428(a) and 428(b), respectively. In the illustrated embodiment of FIG. 4, nozzle 424(a) is aligned at a first radiue r₁, and nozzle 424(b) is aligned at radius r₂. Thus, when rotation stage 456 rotates substrate 102, control unit 430 may supply PGM through supply lines 432 to deposit PGM on the top surface of substrate 102 at a first circumference with radius r₁ and at a second circumference with radius r₂ using nozzles 424(a) and 424(b), respectively. Furthermore, it is to be understood that the embodiments described with reference to FIG. 4 are not exclusive and may be integrated into other PGM deposition apparatuses disclosed and illustrated herein. That is, although PGM deposition apparatus 400 may be illustrated as being configured to deposit PGM on a single substrate, the features thereof (e.g., motor 452, rotation stage 456, etc.) may be utilized in a production-scale PGM deposition apparatus (e.g., PGM deposition apparatuses 100, 200, and/or 300). For example, in FIGs. 1 and 2, rotation stage 456 and wheel 454 may be coupled to conveyors 110 and 210 such that rotation stage 456 is configured to rotate substrates 102 while they are located in deposition regions 112 and 212, respectively. In FIG. 3, rotation stage 456 and 454 be integrated with frame suction unit bar, such that when substrates are placed thereon in deposition region 312, rotation stage(s) 456 cause substrates 102 to rotate about a rotation axis.

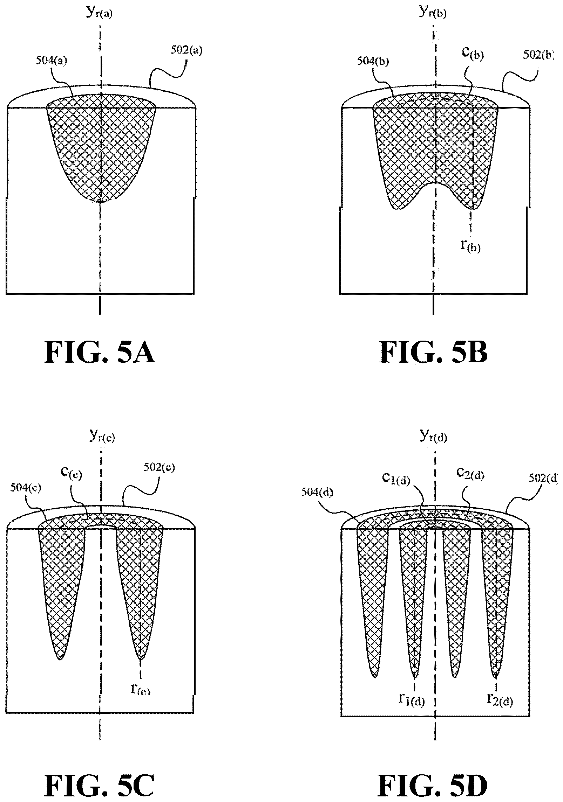

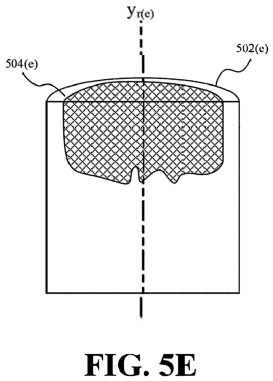

One of ordinary skill in the art will appreciate the distinctiveness and novelty of the coating profiles that may be attained with the disclosed embodiments. By way of example, FIGs. 5A, 5B, 5C, 5D, and 5E each illustrate cross-sections of substrates following PGM deposition, each with different coating profiles that may result from utilizing different PGM flow rates, deposition pressures, suction forces, supply and/or deposition states, charges, temperature gradients, nozzle alignments,nozzle movement, and/or other adjustable parameters, consistent with some embodiments of the present disclosure. For example, FIG. 5A illustrates substrate 502(a) with a "cone" coating profile of PGM 504(a) attained with a fan type nozzle, e.g., a flat fan with even distribution or a full cone with convex distribution.

The coating profile in FIG 5B may be attained by aligning a nozzle at radius r_{(b)} from rotation axis y_{r(b)} and rotating substrate 502(b) in order to deposit PGM 504(b) along circumference c(b). Here, a relatively low suction force or charge may be applied, for example, in order to provide a wide distribution of PGM 504(b). For example, FIG. 5C may be attained with a single nozzle with low moving speed at an edge of the substrate with a high moving speed at the center with shorter spray direction. The coating profile illustrated in 5C may be attained using a similar configuration as applied to substrate 502(b). That is, a single nozzle may be aligned at a radius r_{(c)} from the rotation axis y_{r(c)} to deposit PGM 504(c) along circumference c_{(c)} on the top surface of substrate 502(c). Here, in some embodiments, however, a stronger suction force and/or charge may be applied as compared to that applied to substrate 502(b), causing a deeper penetration and narrower distribution of PGM 504(c). FIG. 5D may be attained by aligning a first nozzle at a radius r_{1(d)} from rotation axis y_{r(d)} and aligning a second nozzle at a radius r_{2(d)} from rotation axis y_{r(d)}. Accordingly PGM 504(d) is deposited on the top surface of substrate 502(d) along both circumference c_{1(d)} and along circumference c_{2(d)}. The suction force and/or charge applied, for example, may be high enough to attain a narrow enough distribution of PGM 504(d) to result in two concentric "cylinders" around axis y_{r(d)}. In some embodiments, FIG. 5E illustrates a cylinder coating profile that may be achieved with two nozzles where one focuses on the profile from the edge to the middle of the subsrate and the other nozzle focuses on the profile from the middle to the center of the substrate. For example, in FIG. 5E, PGM 504(e) is deposited on the top surface of substrate 502(e). One of ordinary skill in the art will understand that FIGs. 5A, 5B, 5C, 5D, and 5E are illustrative only and that many other variations of coating profiles may be attained using the embodiments disclosed herein.

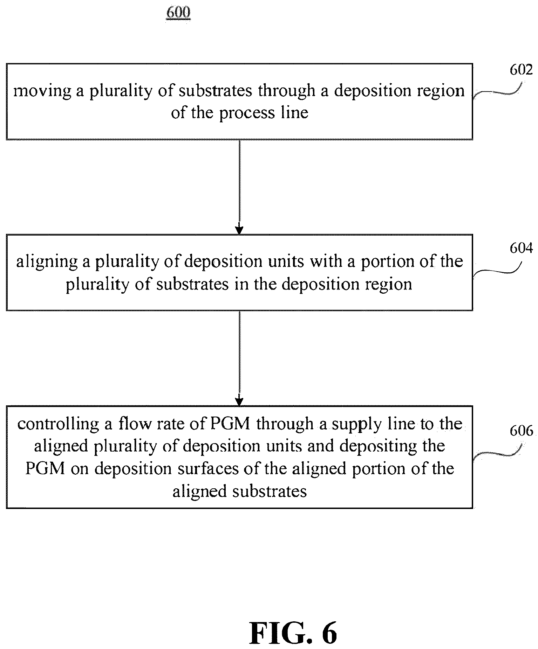

FIG. 6 is a flow diagram of exemplary process 600 for depositing PGM on substrates in a production line, consistent with some embodiments of the present disclosure. Process 600 may be executed, for example, by PGM deposition apparatuses 100, 200, and 300 illustrated in FIGs. 1, 2, and 3, respectively. Process 600 may begin at step 602. At step 602, a plurality of substrates are moved through a deposition region of the production line. Step 602 can be implemented, for example, using at least one movement mechanism and/or alignment mechanism, consistent with some embodiments of the present disclosure. For example, in FIGs. 1, 2, and 3, respectively, conveyor 110 may move substrates 102 through deposition region 112, spiral conveyor 220 can move substrates 102 through deposition region 212, and conveyor 310 may cooperate with robotic arm 314, substrate holders 324, and alignment conveyor 326 to move substrates 102 through deposition region 312.

While the at least one substrates are being moved through the deposition region, process 600 proceeds to step 604. In step 604, a plurality of deposition units are aligned with a portion of the plurality of substrates in the deposition region. Step 604 may be implemented, for example, using at least one movement mechanism and/or alignment mechanism, consistent with some embodiments of the present disclosure. For example, in FIGs. 1, 2, 3, respectively, alignment conveyor 120 may align deposition units 122(a)-(n) with substrates 102 located in deposition region 112, alignment conveyor 220 may cooperate with actuator pairs 224(a)-(n) to align deposition units 222(a)-(n) with substrates 102 located in deposition region 212, and alignment conveyor 326 may move substrate holder 324 to align deposition units 322(a)-(n) with substrates 102 located in deposition region 312.

Once the deposition units are aligned with the portion of the plurality of substrates through step 604, process 600 continues to step 606. In step 606, a flow rate of PGM through at least one supply line to the aligned plurality of deposition units is controlled to deposit the PHM on deposition surfaces of the aligned portion of the plurality of substrates to deposit PGM on the respective substrate(s). Step 606 may be completed, for example, using at least one control unit coupled to the deposition units viua at least one supply line and configured to control a flow rate of PGM through the at least one supply line. For example, in FIGs. 1, 2, 3, respectively, control unit 130 may control a flow rate through supply lines 132 to deposit units 122(a)-(n) to deposit PGM 104 on the aligned substrates in deposition region 112, control unit 230 may control a flow rate through supply lines 232 to deposit units 222(a)-(n) to deposit PGM 104 on the aligned substrates in deposition region 212, and control unit 330 may control a flow rate through supply lines 332 to deposit units 322(a)-(n) to deposit PGM 104 on the aligned substrates in deposition region 312.

Although only three configurations of PGM deposition apparatuses (e.g., PGM deposition apparatuses 100, 200, and 300) are illustrated in FIGs. 1, 2, and 3, one of ordinary skill in the art will understand that the claimed disclosure is not limited to the illustrated embodiments. That is, one could modify or combine individual different elements of the disclosed embodiments in countless different ways and still arrive at the claimed disclosure.

For example, in FIG. 1, alignment conveyor 120 may be a different type or shape of conveyor, positioned in a vertical plane instead of a horizontal plane, or may not be a conveyor whatsoever and instead may be replaced with any one or more suitable alignment mechanisms consistent with the present disclosure. As another example, in FIG. 2, spiral conveyor 210 maybe any other type of flexible conveyor, or it may be a spiral conveyor that moves substrates upwards instead of downwards. Additionally, PGM deposition apparatus 200 may use any other alignment mechanism suitable for aligning deposition elements 222(a)-(b) with substrates 102, such as an alignment conveyor without actuators that follows a path parallel to conveyor 210, instead of a conveyor of circular shape that merely coincides with a circumference of the spiral, as illustrated in FIG. 2. In yet another example, in FIG. 3, alignment mechanism 320 (including substrate holders 324 and alignment conveyor 326) may be located below or to the side of conveyor 210 and may be oriented such that the deposition region coincides with a bottom portion of alignment mechanism 320 instead of a top portion. Additionally, robotic arms 314 need not be located between conveyor 310 and alignment mechanism 320, and instead can be on either side thereof, and may even be located completely above PGM deposition apparatus 300, so long as they are configured to remove substrates 102 from conveyor 310 and provide them to substrate holders 324.

Indeed, the present disclosure provides a PGM deposition mechanism that is flexible in that it may be implemented in a wide variety of configurations, based on the specific needs of an environmental catalyst manufacturing facility. For example, a manufacturing facility may not have much vertical space, but has some horizontal space available, such that the configuration of PGM deposition device in 100 in FIG. 1 would be the most appropriate. As another example, a manufacturing facility may only have a limited circular floor area available with an open vertical space above said floor area, such that the configuration of PGM deposition device 200 in FIG. 2 would be appropriate. As yet another example, a manufacturing facility may have a thin stretch of horizontal space available, and as such, the configuration of PGM deposition device 300 in FIG. 3 or a modification thereof may be the most appropriate. There are many other unique needs that may arise in an environmental catalyst production facility that may warrant a much wider variety of configurations of PGM deposition devices that would still fall within the scope of the claimed disclosure. For instance, it may be contemplated that a configuration with a flexible conveyor with a complex path may be used in a production facility with complex spatial limitations. Additionally, a configuration using strictly vertical conveyors and movement mechanisms may be used in a production center with almost no available horizontal space. Accordingly, the components of the claimed disclosure are not limited to any particular configurations of elements, so long as the function of the components of a PGM deposition apparatus fall within the scope of the claimed disclosure.

Various operations or functions are described herein, which may be implemented or defined as software code or instructions. Such content may be directly executable ("object" or "executable" form), source code, or difference code ("delta" or "patch" code). Software implementations of the embodiments described herein may be provided via an article of manufacture with the code or instructions stored thereon, or via a communication interface method to send data via the communication interface. A machine or computer readable storage medium may cause a machine to perform the functions or operations described and includes any mechanism that stores information in a form accessible by a machine (e.g., computing device, electronic system, and the like), such as recordable/non-recordable media (e.g., read only memory (ROM), random access memory (RAM), magnetic disk storage media, optical storage media, flash memory devices, and the like). A communication interface includes any mechanism that interfaces with any of a hardwired, wireless, optical, or similar, medium to communicate with another device, such as a memory bus interface, a processor bus interface, an Internet connection, a disk controller, and the like. The communication interface may be configured by providing configuration parameters and/or sending signals to prepare the communication interface to provide a data signal describing the software content. The communication interface may be accessed via one or more commands or signals sent to the communication interface.

The present disclosure also relates to a system for performing the operations herein. This system may be specially constructed for the required purposes, or it may comprise a general-purpose computer selectively activated or reconfigured by a computer program stored in the computer. Such a computer program may be stored in a computer readable storage medium, such as, but not limited to, any type of disk including floppy disks, optical disks, CDROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

Embodiments of the present disclosure may be implemented with computer executable instructions. The computer-executable instructions may be organized into one or more computer-executable components or modules. Aspects of the disclosure may be implemented with any number and organization of such components or modules. For example, aspects of the disclosure are not limited to the specific computer-executable instructions or the specific components or modules illustrated in the figures and described herein. Other embodiments may include different computer-executable instructions or components having more or less functionality than illustrated and described herein.

Computer programs based on the written description and methods of this specification are within a software developer's skill. The various programs or program modules may be created using a variety of programming techniques. For example, program sections or program modules may be designed by means of JavaScript, Scala, Python, Java, C, C++, assembly language, or any such programming languages, as well as data encoding languages (such as XML, JSON, etc.), query languages (such as SQL), presentation-related languages (such as HTML, CSS, etc.) and data transformation language (such as XSL). One or more of such software sections or modules may be integrated into a computer system, non-transitory computer readable media, or existing communications software.

The words "comprising," "having," "containing," and "including," and other similar forms are intended to be equivalent in meaning and be interpreted as open ended, in that, an item or items following any one of these words is not meant to be an exhaustive listing of such item or items, or meant to be limited to only the listed item or items. In addition, the singular forms "a," "an," and "the" are intended to include plural references, unless the context clearly dictates otherwise.

It is understood that while certain embodiments are discussed to facilitate understanding of various principles and aspects of this disclosure, the embodiments are not described in isolation and the descriptions are not necessarily mutually exclusive. Thus, it is contemplated and understood that described features of principles of any embodiment may be incorporated into other embodiments.

It will be apparent to those skilled in the art that various modifications and variations can be made to the disclosed camera mount, inflatables, and mount devices. While illustrative embodiments have been described herein, the scope of the disclosure includes any and all embodiments having equivalent elements, modifications, omissions, combinations (e.g., of aspects across various embodiments), adaptations and/or alterations as would be appreciated by those skilled in the art based on the present disclosure. The limitations in the claims are to be interpreted broadly based on the language employed in the claims and not limited to examples described in the present specification or during the prosecution of the application, which examples are to be construed as non-exclusive. It is intended, therefore, that the specification and examples be considered as exemplary only, with a true scope and spirit of the disclosure being indicated by the following claims and their full scope of equivalents.

Non-limiting Example Embodiments:
1. An apparatus for depositing platinum-group metals (PGM) on substrates in a production line, comprising:
   at least one movement mechanism configured to move a plurality of substrates through a deposition region of the production line;
   at least one alignment mechanism configured to align a plurality of deposition units with a portion of the plurality of substrates in the deposition region; and
   at least one control unit configured to control a flow rate of the PGM through at least one supply line to the aligned plurality of deposition units to deposit the PGM on deposition surfaces of the aligned portion of the plurality of substrates.
2. The apparatus of embodiment 1, wherein the at least one alignment mechanism is configured to selectively change a position of the plurality of deposition units in three dimensions relative to deposition surfaces to produce a PGM deposition pattern on the deposition surfaces of the plurality of substrates.
3. The apparatus of embodiment 1, wherein to control the flow rate of the PGM through the at least one supply line comprises controlling a state of at least one valve associated with the at least one supply line.
4. The apparatus of embodiment 1, wherein to control the flow rate of the PGM through the at least one supply line comprises controlling a state of at least one valve associated with at least one of the plurality of deposition units.
5. The apparatus of embodiment 1, wherein at least one of the plurality of deposition units comprises at least one pressurized nozzle.
6. The apparatus of embodiment 5, wherein the at least one pressurized nozzle comprises at least one housing configured to confine the deposition of the PGM to the deposition surfaces or specific portions of the deposition surfaces.
7. The apparatus of embodiment 1, wherein the PGM has a supply state and/or a deposition state that is in a form chosen from one or more of a solution, a suspension, an aerosol, and a slurry, wherein the supply state need not be identical to the deposition state.
8. The apparatus of embodiment 1, wherein the at least one control unit is further configured to control a flow rate of carrier gas through the at least one supply line to modify a deposition pressure, a nebulization, or both of the PGM.
9. The apparatus of embodiment 8, wherein the flow rate and the deposition pressure are non-linear, and the at least one control unit is configured to create different PGM gradients on the deposition surface by modifying the non-linear flow rate and deposition pressure.
10. The apparatus of embodiment 1, further comprising one or more of:
   at least one heating mechanism configured to heat the substrate; and
   at least one charging mechanism configured to positively or negatively charge a substrate, wherein an electrostatic attraction or repulsion is generated between the substrate and the PGM.
11. The apparatus of any one of embodiments 1 to 10, wherein the at least one movement mechanism comprises at least one conveyor configured to move the substrates.
12. The apparatus of embodiment 12, wherein the movement mechanism is further configured to raise, lower, or tilt at least one surface of the at least one conveyor.
13. The apparatus of embodiment 11 or 12, wherein the at least one movement mechanism further comprises at least one secondary movement mechanism configured to:
   remove at least one substrate from the plurality of substrates from the conveyor;
   provide the at least one substrate to the alignment mechanism;
   retrieve the at least one substrate from the at least one alignment mechanism after deposition of the PGM; and
   return the at least one substrate to the conveyor.
14. The apparatus of embodiment 13, wherein the at least one secondary movement mechanism comprises at least one robotic arm.
15. The apparatus of embodiment 12 or 13, wherein the at least one alignment mechanism comprises a plurality of primary alignment mechanisms coupled to a secondary alignment mechanism, wherein:
   each of the plurality of primary alignment mechanisms are configured to receive the at least one substrate from the at least one secondary movement mechanism and to return the at least one substrate to the at least one secondary movement mechanism after the PGM is deposited; and
   the secondary alignment mechanism is configured to move the plurality of primary alignment mechanisms from a first position to a second position and back to the first position, wherein the PGM is deposited in the second position.
16. The apparatus of embodiment 11 or 12, wherein the at least one alignment mechanism comprises a deposition alignment conveyor configured to match a speed and horizontal position of the portion of the plurality of substrates for alignment with the plurality of deposition units.
17. The apparatus of embodiment 16, wherein the at least one conveyor comprises at least one flexible conveyor configured to move the substrates in up to three dimensions, and wherein the deposition alignment conveyor is further configured to match a vertical position of the portion of the plurality of substrates to align them with the plurality of deposition units.
18. The apparatus of embodiment 17, wherein the at least one flexible conveyor comprises at least one spiral conveyor configured to move the plurality of substrates in a spiral about an axis of rotation.
19. The apparatus of any one of embodiments 1-18, wherein the at least one alignment mechanism is further configured to align a plurality of vacuum units with the portion of the plurality of substrates in the deposition region, and to control a suction force applied by the plurality of vacuum units on suction surfaces of the aligned portion of the plurality substrates, the suction surfaces being on an opposite side of the aligned portion of the plurality substrates than deposition surfaces, thereby cooperating with the plurality of deposition units to create a pressure gradient across the substrate.
20. The apparatus of embodiment 19, wherein the plurality of vacuum units are configured to apply a suction force through a mesh conveyor belt.
21. The apparatus of embodiment 1, further comprising at least one rotation stage configured to rotate each substrate in the portion of the plurality of substrates in the deposition region about a vertical rotational axis of the substrate while the PGM is deposited.
22. The apparatus of embodiment 21, wherein at least one of the plurality of deposition units comprises a nozzle, and wherein the at least one alignment mechanism is configured to selectively align the nozzle at a radius from the rotational axis, thereby cooperating with the at least one rotation stage to deposit the PGM on the deposition surface of the substrate along a circumference with the radius and/or wherein the nozzle with a nozzle movement mechanism aligns the nozzle to deposit the PGM on the deposition surface of the substrate.
23. The apparatus of embodiment 21, wherein the at least one of the plurality of deposition units comprisesa first nozzle and a second nozzle, and wherein the at least one alignment mechanism is configured to selectively align the first nozzle at a first radius from the rotational axis and to selectively align the second nozzle at a second radius from the rotational axis, thereby cooperating with the at least one rotation stage to deposit the PGM on the deposition region of the at least one substrate along a first circumference with the first radius and along a second circumference with the second radius and/or wherein the first nozzle and the second nozzle are configured with one or more nozzle movement mechanisms, independently or in combination, aligning the first nozzle and the second nozzle to deposit the PGM on the deposition surface of the substrate.
24. A method for depositing platinum-group metals (PGM) on substrates in a production line, comprising:
   moving, with at least one movement mechanism, a plurality of substrates through a deposition region of the production line;
   aligning, with at least one alignment mechanism, a plurality of deposition units with a portion of the plurality of substrates in the deposition region; and
   controlling, with at least one control unit, a flow rate of the PGM through at least one supply line to the aligned plurality of deposition units and depositing the PGM on deposition surfaces of the aligned portion of the plurality of substrates.
25. The method of embodiment 24, further comprising selectively changing, using the at least one alignment mechanism, a position of the plurality of deposition units in three dimensions relative to deposition surfaces to adjust a PGM deposition pattern on the deposition surfaces.
26. The method of embodiment 24, wherein controlling the flow rate of the PGM through the at least one supply line comprises controlling a state of at least one valve associated with the at least one supply line.
27. The apparatus of embodiment 24, wherein controlling the flow rate of the PGM through the at least one supply line comprises controlling a state of at least one valve associated with at least one of the plurality of deposition units.
28. The method of embodiment 24, wherein at least one of the plurality of deposition units comprises at least one pressurized nozzle.
29. The method of embodiment 28, further comprising confining, with at least one housing associated with the at least one pressurized nozzle, the deposition of the PGM to the deposition surfaces or specific portions of the deposition surfaces.
30. The method of embodiment 24, wherein the PGM has a supply state and/or a deposition state that is in a form chosen from one or more of a solution, a suspension, an aerosol, and a slurry, wherein the supply state need not be identical to the deposition state.
31. The method of embodiment 24, further comprising controlling, with the at least one control unit, a flow rate of carrier gas through the at least one supply line to modify a deposition pressure, a nebulization, or both of the PGM.
32. The method of embodiment 31, wherein the flow rate and the deposition pressure are non-linear, and the method further comprises creating, with the at least one control unit, a plurality of different PGM gradients on the deposition surface by controlling the non-linear flow rate and deposition pressure.
33. The method of embodiment 24, further comprising one or more of:
   heating the substrate with at least one heating mechanism; and
   positively or negatively charging a substrate with at least one charging mechanism to create an electrostatic attraction or repulsion with the PGM.
34. The method of any one of embodiments 24 to 33, wherein the at least one movement mechanism comprises at least one conveyor configured to move the substrates.
35. The method of embodiment 24, further comprising raising, lowering, or tilting at least one surface of the at least one conveyor using the at least one movement mechanism.
36. The method of embodiment 34 or 35, wherein the at least one movement mechanism further comprises at least one of secondary movement mechanism, and the method further comprises using the at least one secondary movement mechanism to:
   remove at least one substrate in the portion of the plurality of substrates from the conveyor;
   provide the at least one substrate to the alignment mechanism;
   retrieve the at least one substrate from the at least one alignment mechanism after deposition of the PGM; and
   return the at least one substrate to the conveyor.
37. The method of embodiment 36, wherein the at least one secondary movement mechanism comprises at least one robotic arm.
38. The method of embodiment 36 or 37, wherein the at least one alignment mechanism comprises a plurality of primary alignment mechanisms coupled to a secondary alignment mechanism, and the method further comprises:
   receiving, with at least one of the plurality of primary alignment mechanisms, the at least one substrate from the at least one secondary movement mechanism and to return the at least one substrate to the at least one secondary movement mechanism after the PGM is deposited; and
   moving, with the secondary alignment mechanism, the plurality of primary alignment mechanisms from a first position to a second position and back to the first position, wherein the PGM is deposited in the second position.
39. The method of embodiment 34 or 35, further comprising matching, with a deposition alignment conveyor of the at least one alignment mechanism, a speed and horizontal position of the portion of the plurality of substrates to align them with the plurality of deposition units.
40. The method of embodiment 39, wherein the at least one conveyor comprises at least one flexible conveyor configured to move the substrates in up to three dimensions, and the method further comprises matching, with the deposition alignment conveyor, a vertical position of the portion of the plurality of substrates to align them with the plurality of deposition units.
41. The method of embodiment 40, wherein the at least one flexible conveyor comprises at least one spiral conveyor configured to move the plurality of substrates in a spiral about an axis of rotation.
42. The method of any one of embodiments 24-41, further comprising aligning, with the at least one aligning mechanism, a plurality of vacuum units with the portion of the plurality of substrates in the deposition region, and controlling a suction force applied by the plurality of vacuum units on suction surfaces of the aligned portion of the plurality of substrates, wherein the suction surfaces are on an opposite side of the aligned portion of the plurality substrates than deposition surfaces, thereby cooperating with the plurality of deposition units to create a pressure gradient across the aligned portion of the plurality substrates.
43. The method of embodiment 42, wherein the plurality of vacuum units are configured to apply a suction force through a mesh conveyor belt.
44. The method of any one of embodiments 24-43, further comprising rotating, with at least one rotation stage, each substrate in the portion of the plurality of substrates in the deposition region about a vertical rotational axis of the substrate while the PGM is deposited.
45. The method of embodiment 44, further comprising:
   selectively positioning a nozzle associated with the plurality of deposition units at a first radius from the rotational axis; and
   depositing the PGM, with the at least one nozzle, on the deposition surface along a first circumference with the first radius.
46. The method of embodiment 44, further comprising:
   selectively aligning, with the at least one alignment mechanism, a first nozzle associated with at least one of the plurality of deposition units at a first radius from the rotational axis;
   selectively aligning, with the at least one alignment mechanism, a second nozzle associated the at least one of the plurality of deposition units at a second radius from the rotational axis; and
   depositing the PGM, with the first nozzle and the second nozzle, on the deposition surface of the substrate along a first circumference with the first radius and a second circumference with the second radius.
47. The method of any one of embodiments 24-43, further comprising:
   selectively positioning a nozzle associated with the plurality of deposition units and a nozzle movement mechism; and
   depositing the PGM, with the at least one nozzle, on the deposition surface.
48. The method of any one of embodiments 24-43, further comprising:
   selectively aligning, with the at least one nozzle movement mechanism, a first nozzle associated with at least one of the plurality of deposition units at a first radius from the rotational axis;
   selectively aligning, with the at least one nozzle movement mechanism, a second nozzle associated the at least one of the plurality of deposition units at a second radius from the rotational axis; and
   depositing the PGM, with the first nozzle and the second nozzle, on the deposition surface of the substrate along a first circumference with the first radius and a second circumference with the second radius.
49. An apparatus for depositing platinum-group metals (PGM) on substrates, comprising:
   at least one rotation stage configured to rotate a substrate about a vertical rotational axis of the substrate while PGM is deposited on the substrate;
   at least one alignment mechanism configured to selectively align at least one nozzle above the substrate at at least one radius from the rotational axis, thereby cooperating with the at least one rotation stage to deposit the PGM on the deposition surface of the substrate along a circumference with the radius; and
   at least one control unit configured to control a flow rate of the PGM through at least one supply line to the aligned at least one nozzle to deposit the PGM on deposition surfaces of the substrate at at least one circumference with the at least one radius.
50. A method for depositing platinum-group metals (PGM) on substrates, comprising:
   rotatining, with at least one rotation stage, moving, with at least one movement mechanism, a plurality of substrates through a deposition region of the production line;
   selectively aligning, with at least one alignment mechanism, at least one nozzle above the substrate at at least one radius from the rotational axis, thereby cooperating with the at least one rotation stage to deposit the PGM on the deposition surface of the substrate along a circumference with the radius; and
   controlling, with at least one control unit, a flow rate of the PGM through at least one supply line to the aligned at least one nozzle and depositing the PGM on deposition surfaces of the substrate at at least one circumference with the at least one radius.

## Claims

1. An apparatus for depositing platinum-group metals (PGM) on substrates in a production line, comprising:
at least one movement mechanism configured to move a plurality of substrates through a deposition region of the production line;
at least one alignment mechanism configured to align a plurality of deposition units with a portion of the plurality of substrates in the deposition region; and
at least one control unit configured to control a flow rate of the PGM through at least one supply line to the aligned plurality of deposition units to deposit the PGM on deposition surfaces of the aligned portion of the plurality of substrates.

2. The apparatus of claim 1, wherein the at least one alignment mechanism is configured to selectively change a position of the plurality of deposition units in three dimensions relative to deposition surfaces to produce a PGM deposition pattern on the deposition surfaces of the plurality of substrates,
or wherein to control the flow rate of the PGM through the at least one supply line comprises controlling a state of at least one valve associated with the at least one supply line,
or wherein to control the flow rate of the PGM through the at least one supply line comprises controlling a state of at least one valve associated with at least one of the plurality of deposition units.

3. The apparatus of claim 1, wherein at least one of the plurality of deposition units comprises at least one pressurized nozzle, preferably wherein the at least one pressurized nozzle comprises at least one housing configured to confine the deposition of the PGM to the deposition surfaces or specific portions of the deposition surfaces.

4. The apparatus of claim 1, wherein the PGM has a supply state and/or a deposition state that is in a form chosen from one or more of a solution, a suspension, an aerosol, and a slurry, wherein the supply state need not be identical to the deposition state,
or wherein the at least one control unit is further configured to control a flow rate of carrier gas through the at least one supply line to modify a deposition pressure, a nebulization, or both of the PGM, preferably wherein the flow rate and the deposition pressure are non-linear, and the at least one control unit is configured to create different PGM gradients on the deposition surface by modifying the non-linear flow rate and deposition pressure.

5. The apparatus of claim 1, further comprising one or more of:
at least one heating mechanism configured to heat the substrate; and
at least one charging mechanism configured to positively or negatively charge a substrate, wherein an electrostatic attraction or repulsion is generated between the substrate and the PGM.

6. The apparatus of any one of claims 1 to 5, wherein the at least one movement mechanism comprises at least one conveyor configured to move the substrates, preferably wherein the movement mechanism is further configured to raise, lower, or tilt at least one surface of the at least one conveyor, and/or preferably wherein the at least one movement mechanism further comprises at least one secondary movement mechanism configured to:
remove at least one substrate from the plurality of substrates from the conveyor;
provide the at least one substrate to the alignment mechanism;
retrieve the at least one substrate from the at least one alignment mechanism after deposition of the PGM; and
return the at least one substrate to the conveyor, more preferably wherein the at least one secondary movement mechanism comprises at least one robotic arm.

7. The apparatus of claim 6, wherein the at least one alignment mechanism comprises a plurality of primary alignment mechanisms coupled to a secondary alignment mechanism, wherein:
each of the plurality of primary alignment mechanisms are configured to receive the at least one substrate from the at least one secondary movement mechanism and to return the at least one substrate to the at least one secondary movement mechanism after the PGM is deposited; and
the secondary alignment mechanism is configured to move the plurality of primary alignment mechanisms from a first position to a second position and back to the first position, wherein the PGM is deposited in the second position.

8. The apparatus of claim 6, wherein the at least one alignment mechanism comprises a deposition alignment conveyor configured to match a speed and horizontal position of the portion of the plurality of substrates for alignment with the plurality of deposition units, optionally wherein the at least one conveyor comprises at least one flexible conveyor configured to move the substrates in up to three dimensions, and wherein the deposition alignment conveyor is further configured to match a vertical position of the portion of the plurality of substrates to align them with the plurality of deposition units, preferably wherein the at least one flexible conveyor comprises at least one spiral conveyor configured to move the plurality of substrates in a spiral about an axis of rotation.

9. The apparatus of any one of claims 1-8, wherein the at least one alignment mechanism is further configured to align a plurality of vacuum units with the portion of the plurality of substrates in the deposition region, and to control a suction force applied by the plurality of vacuum units on suction surfaces of the aligned portion of the plurality substrates, the suction surfaces being on an opposite side of the aligned portion of the plurality substrates than deposition surfaces, thereby cooperating with the plurality of deposition units to create a pressure gradient across the substrate, preferably wherein the plurality of vacuum units are configured to apply a suction force through a mesh conveyor belt.

10. The apparatus of claim 1, further comprising at least one rotation stage configured to rotate each substrate in the portion of the plurality of substrates in the deposition region about a vertical rotational axis of the substrate while the PGM is deposited, preferably wherein at least one of the plurality of deposition units comprises a nozzle, and wherein the at least one alignment mechanism is configured to selectively align the nozzle at a radius from the rotational axis, thereby cooperating with the at least one rotation stage to deposit the PGM on the deposition surface of the substrate along a circumference with the radius and/or wherein the nozzle with a nozzle movement mechanism aligns the nozzle to deposit the PGM on the deposition surface of the substrate, or preferably wherein the at least one of the plurality of deposition units comprises a first nozzle and a second nozzle, and wherein the at least one alignment mechanism is configured to selectively align the first nozzle at a first radius from the rotational axis and to selectively align the second nozzle at a second radius from the rotational axis, thereby cooperating with the at least one rotation stage to deposit the PGM on the deposition region of the at least one substrate along a first circumference with the first radius and along a second circumference with the second radius and/or wherein the first nozzle and the second nozzle are configured with one or more nozzle movement mechanisms, independently or in combination, aligning the first nozzle and the second nozzle to deposit the PGM on the deposition surface of the substrate.

11. A method for depositing platinum-group metals (PGM) on substrates in a production line, comprising:
moving, with at least one movement mechanism, a plurality of substrates through a deposition region of the production line;
aligning, with at least one alignment mechanism, a plurality of deposition units with a portion of the plurality of substrates in the deposition region; and
controlling, with at least one control unit, a flow rate of the PGM through at least one supply line to the aligned plurality of deposition units and depositing the PGM on deposition surfaces of the aligned portion of the plurality of substrates.

12. The method of claim 11, further comprising selectively changing, using the at least one alignment mechanism, a position of the plurality of deposition units in three dimensions relative to deposition surfaces to adjust a PGM deposition pattern on the deposition surfaces,
or wherein controlling the flow rate of the PGM through the at least one supply line comprises controlling a state of at least one valve associated with the at least one supply line,
or wherein controlling the flow rate of the PGM through the at least one supply line comprises controlling a state of at least one valve associated with at least one of the plurality of deposition units, or wherein at least one of the plurality of deposition units comprises at least one pressurized nozzle, preferably further comprising confining, with at least one housing associated with the at least one pressurized nozzle, the deposition of the PGM to the deposition surfaces or specific portions of the deposition surfaces,
or wherein the PGM has a supply state and/or a deposition state that is in a form chosen from one or more of a solution, a suspension, an aerosol, and a slurry, wherein the supply state need not be identical to the deposition state, or further comprising controlling, with the at least one control unit, a flow rate of carrier gas through the at least one supply line to modify a deposition pressure, a nebulization, or both of the PGM, preferably wherein the flow rate and the deposition pressure are non-linear, and the method further comprises creating, with the at least one control unit, a plurality of different PGM gradients on the deposition surface by controlling the non-linear flow rate and deposition pressure,
or further comprising one or more of:
heating the substrate with at least one heating mechanism; and
positively or negatively charging a substrate with at least one charging mechanism to create an electrostatic attraction or repulsion with the PGM.

13. The method of claim 11 or claim 12, wherein the at least one movement mechanism comprises at least one conveyor configured to move the substrates, optionally further comprising raising, lowering, or tilting at least one surface of the at least one conveyor using the at least one movement mechanism, and/or preferably wherein the at least one movement mechanism further comprises at least one of secondary movement mechanism, and the method further comprises using the at least one secondary movement mechanism to:
remove at least one substrate in the portion of the plurality of substrates from the conveyor;
provide the at least one substrate to the alignment mechanism;
retrieve the at least one substrate from the at least one alignment mechanism after deposition of the PGM; and
return the at least one substrate to the conveyor, more preferably wherein the at least one secondary movement mechanism comprises at least one robotic arm.

14. The method of claim 13, wherein the at least one alignment mechanism comprises a plurality of primary alignment mechanisms coupled to a secondary alignment mechanism, and the method further comprises:
receiving, with at least one of the plurality of primary alignment mechanisms, the at least one substrate from the at least one secondary movement mechanism and to return the at least one substrate to the at least one secondary movement mechanism after the PGM is deposited; and
moving, with the secondary alignment mechanism, the plurality of primary alignment mechanisms from a first position to a second position and back to the first position, wherein the PGM is deposited in the second position.

15. The method of claim 13, further comprising matching, with a deposition alignment conveyor of the at least one alignment mechanism, a speed and horizontal position of the portion of the plurality of substrates to align them with the plurality of deposition units, preferably wherein the at least one conveyor comprises at least one flexible conveyor configured to move the substrates in up to three dimensions, and the method further comprises matching, with the deposition alignment conveyor, a vertical position of the portion of the plurality of substrates to align them with the plurality of deposition units, more preferably wherein the at least one flexible conveyor comprises at least one spiral conveyor configured to move the plurality of substrates in a spiral about an axis of rotation.

16. The method of any one of claims 11-15, further comprising aligning, with the at least one aligning mechanism, a plurality of vacuum units with the portion of the plurality of substrates in the deposition region, and controlling a suction force applied by the plurality of vacuum units on suction surfaces of the aligned portion of the plurality of substrates, wherein the suction surfaces are on an opposite side of the aligned portion of the plurality substrates than deposition surfaces, thereby cooperating with the plurality of deposition units to create a pressure gradient across the aligned portion of the plurality substrates, preferably wherein the plurality of vacuum units are configured to apply a suction force through a mesh conveyor belt.

17. The method of any one of claims 11-16, further comprising rotating, with at least one rotation stage, each substrate in the portion of the plurality of substrates in the deposition region about a vertical rotational axis of the substrate while the PGM is deposited, preferably further comprising:
selectively positioning a nozzle associated with the plurality of deposition units at a first radius from the rotational axis; and
depositing the PGM, with the at least one nozzle, on the deposition surface along a first circumference with the first radius, or preferably further comprising:
selectively aligning, with the at least one alignment mechanism, a first nozzle associated with at least one of the plurality of deposition units at a first radius from the rotational axis;
selectively aligning, with the at least one alignment mechanism, a second nozzle associated the at least one of the plurality of deposition units at a second radius from the rotational axis; and
depositing the PGM, with the first nozzle and the second nozzle, on the deposition surface of the substrate along a first circumference with the first radius and a second circumference with the second radius.

18. The method of any one of claims 11-17, further comprising:
selectively positioning a nozzle associated with the plurality of deposition units and a nozzle movement mechism; and
depositing the PGM, with the at least one nozzle, on the deposition surface, or further comprising:
selectively aligning, with the at least one nozzle movement mechanism, a first nozzle associated with at least one of the plurality of deposition units at a first radius from the rotational axis;
selectively aligning, with the at least one nozzle movement mechanism, a second nozzle associated the at least one of the plurality of deposition units at a second radius from the rotational axis; and
depositing the PGM, with the first nozzle and the second nozzle, on the deposition surface of the substrate along a first circumference with the first radius and a second circumference with the second radius.
